# EUROPEAN PATENT APPLICATION

(11) **EP 2 613 556 A1**
(43) Date of publication of application: **10.07.2013**
(21) Application number: 12179348.3
(22) Date of filing: 06.08.2012
(51) Int. Cl.: H04N 21/436, H04N 21/442, H04N 21/431, H04N 21/4363, H04N 21/422, H04N 21/41, H04N 21/443, G06F 3/00

(54) **Method and electronic apparatus for controlling an external apparatus or an appratus connected to the external aparatus**

(30) Priority: 06.01.2012 JP 2012001626
(71) Applicant: Kabushiki Kaisha Toshiba, Tokyo 105-8001 (JP)
(72) Inventor: Yamashita, Joji, Tokyo, 105-8001 (JP)
(74) Representative: HOFFMANN EITLE

(57) **Abstract**

According to one embodiment, an electronic apparatus configured to control an external apparatus, the electronic apparatus includes, a communicator (272) configured to communicate with the external apparatus, a recognition module (250) configured to recognize a connection apparatus connected to the external apparatus, an operation menu generator (250) configured to generate an operation menu which is used to control the external apparatus or the connection apparatus, and a controller (250) configured to control in such a manner that a divided operation screen including display regions which are used to display the operation menus is displayed in a display and a signal is transmitted to the external apparatus in accordance with an operation in the divided operation screen.

## Description

Embodiment described herein relate generally to electronic apparatus and controlling method for electronic apparatus.

Electronic apparatuses such as a content reproduction apparatus that can reproduce video contents, e.g., movies, television programs, or games have conventionally generally become widespread.

Further, there has been put into practical use an electronic apparatus which comprises a display that displays various kinds of information and a touch sensor that generates a signal in response to an operation performed by a user, wirelessly transmits the signal generated by the touch sensor to the above-described content reproduction apparatus, and remotely controls the content reproduction apparatus.

There is a demand of operating the content reproduction apparatus and the electronic apparatus that remotely controls the content reproduction apparatus in cooperation with each other and further saving a user the trouble.

A general architecture that implements the various features of the embodiments will now be described with reference to the drawings. The drawings and the associated descriptions are provided to illustrate the embodiments and not to limit the scope of the invention.
FIG. 1 is an exemplary view showing an electronic apparatus according to an embodiment.
FIG. 2 is an exemplary view showing the electronic apparatus according to the embodiment.
FIG. 3 is an exemplary view showing the electronic apparatus according to the embodiment.
FIG. 4 is an exemplary view showing the electronic apparatus according to the embodiment.
FIG. 5 is an exemplary view showing the electronic apparatus according to the embodiment.
FIG. 6 is an exemplary view showing the electronic apparatus according to the embodiment.
FIG. 7 is an exemplary view showing the electronic apparatus according to the embodiment.
FIG. 8 is an exemplary view showing the electronic apparatus according to the embodiment.
FIG. 9 is an exemplary view showing the electronic apparatus according to the embodiment.
FIG. 10 is an exemplary view showing the electronic apparatus according to the embodiment.

Various embodiments will be described hereinafter with reference to the accompanying drawings. In general, according to one embodiment, an electronic apparatus configured to control an external apparatus, the electronic apparatus comprises, a communicator configured to communicate with the external apparatus, a recognition module configured to recognize a connection apparatus connected to the external apparatus, an operation menu generator configured to generate an operation menu which is used to control the external apparatus or the connection apparatus, and a controller configured to control in such a manner that a divided operation screen including display regions which are used to display the operation menus is displayed in a display and a signal is transmitted to the external apparatus in accordance with an operation in the divided operation screen.

An electronic apparatus and a controlling method for an electric apparatus according to an embodiment will now be described hereinafter in detail with reference to the drawings.

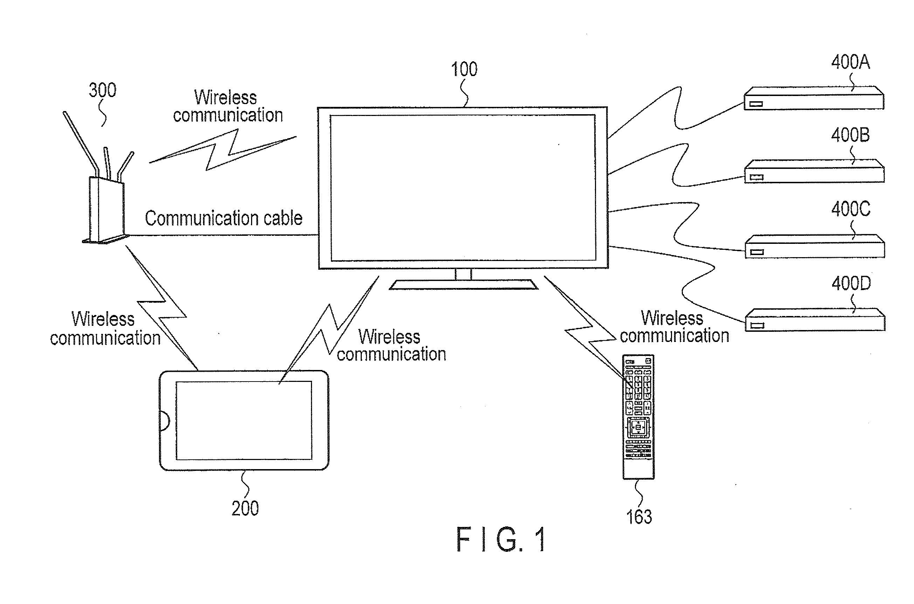

FIG. 1 shows an example of a system constituted of electronic apparatuses. This system has, e.g., a content reproduction apparatus 100, a mobile terminal 200, a wireless communication terminal 300, and others.

The content reproduction apparatus 100 is an electronic apparatus such as a broadcast reception apparatus that can reproduce, e.g., a broadcast signal or video contents stored in a storage medium. It is to be noted that the content reproduction apparatus 100 is assumed to be a broadcast reception apparatus 100 in the following description. Furthermore, the broadcast reception apparatus 100 comprises a remote controller 163, the mobile terminal 200, and a communicator configured to communicate with the wireless communication terminal 300.

Moreover, when the content reproduction apparatus 100 is connected with, e.g., a cable box 400A, a satellite box 400B, a BD/DVD player 400C, or an audio player 400D (which will be generically referred to as a connection apparatus 400), contents can be transmitted between the respective apparatuses.

The mobile terminal 200 is an electronic apparatus comprising a display, an operation module, and a communicator. The mobile terminal 200 is, e.g., a mobile phone terminal, a tablet PC, a mobile music player, or any other electronic apparatus.

The wireless communication terminal 300 comprises the mobile terminal 200 and a communicator configured to wirelessly communicate with the wireless communication terminal 300. For example, the wireless communication terminal 300 functions as an access point for wireless communication. That is, the wireless communication terminal 300 can communicate with the broadcast reception apparatus 100 in a wireless manner or through a communication cable such as an LAN cable. Additionally, the wireless communication terminal 300 can wirelessly communicate with the mobile terminal 200. That is, the broadcast reception apparatus 100, the mobile terminal 200, and the wireless communication terminal 300 are connected with each other via a communication protocol (e.g., IP) that enables interactive communication.

For example, the broadcast reception apparatus 100 and the mobile terminal 200 have a function of communicating with the wireless communication terminal 300 based on IEEE802.11b/g/n and the like. Further, the broadcast reception apparatus 100 and the mobile terminal 200 may have a function of directly wirelessly communicating with each other. That is, the broadcast reception apparatus 100 and the mobile terminal 200 can transmit/receive data through the wireless communication terminal 300 or directly.

It is to be noted that the mobile terminal 200 can transmit a control signal to the broadcast reception apparatus 100 based on wireless communication. That is, the mobile terminal 200 can function as a control apparatus that controls the broadcast reception apparatus 100 (an apparatus to be controlled). It is to be noted that the apparatus to be controlled will be referred to as a controlled apparatus. The broadcast reception apparatus 100 (the controlled apparatus) executes processing associated with a control signal (a control command) from the control apparatus that controls. Furthermore, the broadcast reception apparatus 100 as the controlled apparatus transmits its own current operation status to the control apparatus. The broadcast reception apparatus 100 transmits an operation status at either timing associated with an event on the controlled apparatus side or timing as periodic notification.

For example, the mobile terminal 200 periodically performs polling with respect to the broadcast reception apparatus 100 based on wireless communication. As a result, the mobile terminal 200 can recognize a state of the broadcast reception apparatus 100. That is, when the broadcast reception apparatus 100 receives a command concerning the polling from the mobile terminal 200, it returns information concerning a connection apparatus, information concerning a running application, or any other information to the mobile terminal 200. As a result, the mobile terminal 200 can recognize the information concerning the connection apparatus connected to the broadcast reception apparatus 100, the information concerning the application executed by the broadcast reception apparatus 100, or any other information.

The cable box 400A is an apparatus that demodulates a broadcast signal for a cable broadcast or the like and acquires contents. The cable box 400A supplies acquired contents to the broadcast reception apparatus 100. The broadcast reception apparatus 100 can reproduce the contents supplied from the cable box 400A.

The satellite box 400B is an apparatus that demodulates a broadcast signal for a satellite broadcast or the like and acquires contents. The satellite box 400B supplies the acquired contents to the broadcast reception apparatus 100. The broadcast reception apparatus 100 can reproduce the contents supplied from the satellite box 400B.

The BD/DVD player 400C is an apparatus that reads contents from a Blu-ray (registered trademark) disk (BD) or a DVD. The BD/DVD player 400C supplies the read contents to the broadcast reception apparatus 100. The broadcast reception apparatus 100 can reproduce the contents supplied from the BD/DVD player 400C. Additionally, the BD/DVD player 400C can receive the contents from the broadcast reception apparatus 100. The BD/DVD player 400C can record the contents received from the broadcast reception apparatus 100 in a BD or a DVD.

The audio player 400D is an apparatus that reads contents from a CD or the like. The audio player 400D supplies the read contents to the broadcast reception apparatus 100. The broadcast reception apparatus 100 can reproduce the contents supplied from the audio player 400D. Further, the audio player 400D can reproduce the contents supplied from the broadcast reception apparatus 100 using a speaker or the like.

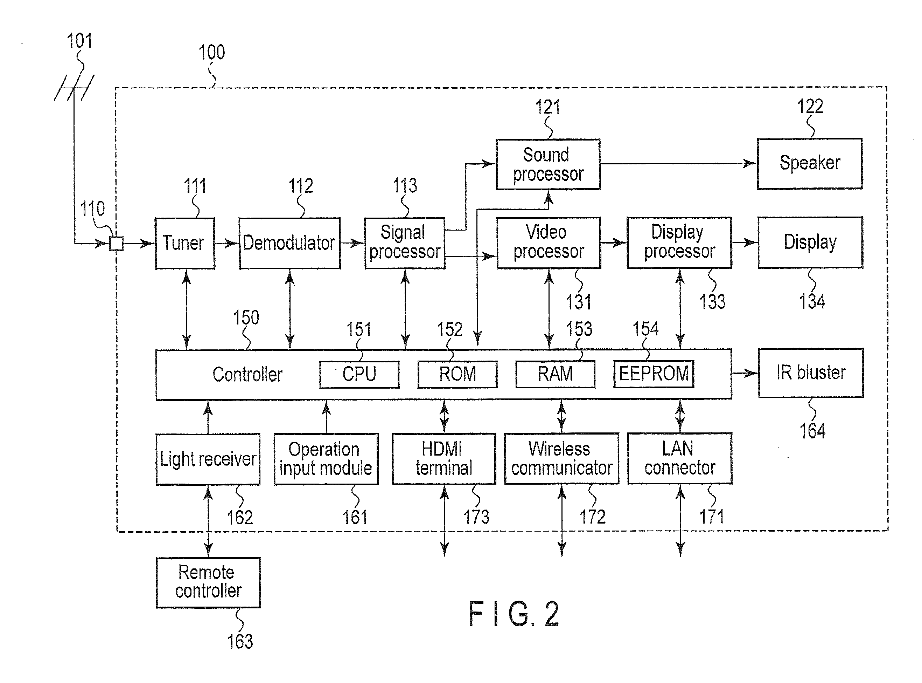

FIG. 2 shows an example of the broadcast reception apparatus 100 according to an embodiment.

The broadcast reception apparatus 100 comprises a broadcast signal input terminal 110, a tuner 111, a demodulator 112, a signal processor 113, a sound processor 121, a video processor 131, a display processor 133, a controller 150, an operation input module 161, a light receiver 162, an IR bluster 164, an LAN connector 171, a wireless communicator 172, and an HDMI terminal 173. Further, the broadcast reception apparatus 100 also comprises a speaker 122 and a display 134.

The broadcast signal input terminal 110 can receive a digital broadcast signal received by, e.g., an antenna 101. The antenna 101 can receive, e.g., a terrestrial digital broadcast signal, a broadcasting satellite (BS) digital broadcast signal, and/or a 110-degree communication satellite (CS) digital broadcast signal. The broadcast signal input terminal 110 can receive data of contents such as a program supplied using the digital broadcast signal.

The broadcast signal input terminal 110 supplies the received digital broadcast signal to the tuner 111. The tuner 111 is a tuner for a digital broadcast signal. The tuner 111 transmits the tuned digital broadcast signal to the demodulator 112.

The demodulator 112 demodulates the digital broadcast signal. As a result, the demodulator 112 acquires content data such as a transport stream (TS) from the digital broadcast signal. The demodulator 112 inputs the acquired content data to the signal processor 113. That is, the antenna 101, the tuner 111, and the demodulator 112 function as a receiver configured to receive content data.

The signal processor 113 executes signal processing such as separation of the content data. That is, the signal processor 113 divides the content data into a digital video signal, a digital sound signal, and any other data signal. The signal processor 113 supplies a sound signal to the sound processor 121. Furthermore, the signal processor 113 supplies a video signal to the video processor 131. Moreover, the signal processor 113 supplies a data signal to the controller 150.

The sound processor 121 converts the digital sound signal received from the signal processor 113 into a signal (an audio signal) having a format that can be reproduced through the speaker 122. For example, the sound processor 121 converts the digital sound signal into an audio signal based on digital/analog conversion. The sound processor 121 supplies the audio signal to the speaker 122. The speaker 122 reproduces sound based on the supplied audio signal.

The video processor 131 converts the digital video signal received from the signal processor 113 into a video signal having a format that can be reproduced in the display 134. That is, the video processor 131 decodes (reproduces) the digital video signal received from the signal processor 113 into a video signal having a format that can be reproduced in the display 134. The video processor 131 outputs the video signal to the display processor 133.

The display processor 133 executes image quality adjustment processing concerning hue, brightness, sharpness, contrast, or others with respect to the received video signal under control of the controller 150, for example. The display processor 133 supplies the video signal subjected to the image quality adjustment to the display 134. The display 134 displays video pictures based on the supplied video signal.

The display 134 comprises, e.g., a liquid crystal display apparatus including a liquid crystal display panel including pixels aligned in a matrix form and a backlight that illuminates this liquid crystal panel. The display 134 displays video pictures based on the video signal supplied from the display processor 133.

The controller 150 functions as a controller configured to control operations of the respective units in the broadcast reception apparatus 100. The controller 150 comprises a CPU 152, an ROM 152, an RAM 153, an EEPROM 154, and others. The controller 150 executes various kinds of processing based on operation signals supplied from the operation input module 162.

The CPU 151 comprises an arithmetic operation element or the like that executes various kinds of arithmetic processing. The CPU 151 executes programs stored in, e.g., the ROM 152 or the EEPROM 154 and thereby realizes various functions.

The ROM 152 stores a program for controlling the broadcast reception apparatus 100, a program for realizing various functions, and others. The CPU 151 runs the programs stored in the ROM 152 based on operation signals supplied from the operation input module 161. As a result, the controller 150 controls operations of the respective units.

The RAM 153 functions as a work memory of the CPU 151. That is, the RAM 153 stores arithmetic results of the CPU 151, data read by the CPU 151, and others.

The EEPROM 154 is a nonvolatile memory that stores various kinds of setting information, programs, and others.

The operation input module 161 includes, e.g., operation keys or a touch pad that generates operation signals in response to input of operations performed by a user. Moreover, the operation input module 161 may be configured to receive operation signals from a keyboard, a mouse, or any other input apparatus that can generate the operation signals. The operation input module 161 supplies the operation signals to the controller 150.

It is to be noted that the touch pad includes a capacitance sensor, a thermosensor, or a device that generates positional information based on any other system. Additionally, when the broadcast reception apparatus 100 includes the display 134, the operation input module 161 may be configured to include a touch panel or the like that is integrally formed with the display 134.

The light receiver 162 comprises, e.g., a sensor that receives an operation signal from the remote controller 163. The light receiver 162 supplies the received signal to the controller 150. The controller 150 receives the signal supplied from the light receiver 162, amplifies the received signal, and subjects the signal to A/D conversion, whereby the signal is decoded into the original operation signal supplied from the remote controller 163.

The remote controller 163 generates an operation signal based on input of an operation performed by a user. The remote controller 163 supplies the generated operation signal to the light receiver 162 based on infrared communication. It is to be noted that the light receiver 162 and the remote controller 163 may be configured to transmit/receive the operation signal based on any other wireless communication, e.g., electric waves. The detailed configuration of the remote controller 163 will be described later.

The IR bluster 164 is a module that is configured to transmit a signal from the remote controller to the cable box 400A, the satellite box 400B, the BD/DVD player 400C, the audio player 400D, or any other connection apparatus 400. The IR bluster 164 includes a diode that emits infrared rays and a light guide member that guides the emitted infrared rays. The light guide member guides the infrared rays in such a manner that the infrared rays enters the light receiver that receives the infrared rays of any other apparatus.

The controller 150 supplies a signal (a control signal) received from the remote controller 163 or the mobile terminal 200 to the IR bluster 164. The IR bluster 164 emits the infrared rays in accordance with the received control signal. As a result, the IR bluster 164 can transmit the control signal to the connection apparatus 400 using the infrared rays.

The LAN connector 171 is an interface configured to enable communication with other apparatuses on a network, e.g., the Internet, an intranet, or a home network through the LAN. As described above, when the wireless communication terminal 300 is connected with the LAN connector 171 through the LAN cable, the broadcast reception apparatus 100 can communicate with other apparatuses connected with the wireless communication terminal 300. For example, the broadcast reception apparatus 100 can acquire and reproduce contents recorded in the apparatuses on the network through the LAN connector 171. Further, the broadcast reception apparatus 100 can output the content data connected through the LAN connector 171.

The wireless communicator 172 is an interface configured to communicate with the wireless communication terminal as an access point through the wireless LAN. The wireless communicator 172 can communicate with any other apparatus on a network, e.g., the Internet, an intranet, or a home network through the wireless communication terminal 300. For example, the wireless communicator 172 has a function of communicating with the wireless communication terminal 300 based on IEEE802.11b/g/n and the like.

As described above, when the wireless communication terminal 300 is connected to the wireless communicator 172 using the wireless LAN, the broadcast reception apparatus 100 can communicate with any other apparatus connected to the wireless communication terminal 300. Further, the wireless communicator 172 may be configured to perform communication directly with any other apparatus without interposing the wireless communication terminal 300 based on the wireless LAN.

The HDMI terminal 173 is an interface configured to perform communication based on a standard such as High Definition Multimedia Interface (HDMI) (registered trademark). To the TDMI terminal is connected a Blu-ray (registered trademark) recorder, a DVD recorder, a hard disk recorder, or an apparatus compatible with any other apparatus based on HDMI.

The controller 150 inputs content data received through the HDMI terminal 173 to the signal processor 113. The signal processor 113 separates a digital video signal, a digital sound signal, and others from the received content data. The signal processor 113 transmits the separated digital video signal to the video processor 131 and transmits the separated digital sound signal to the sound processor 121.

The above-described connection apparatus 400 is connected to the broadcast reception apparatus 100 through the HDMI terminal 173. In this case, the broadcast reception apparatus 100 can transmit a control signal to the connection apparatus 400 through the HDMI terminal 173.

Further, the broadcast reception apparatus 100 may be configured to comprise a memory apparatus such as a hard disk drive (HDD) so that a broadcast signal or contents supplied through a network or the like can be stored in this memory apparatus.

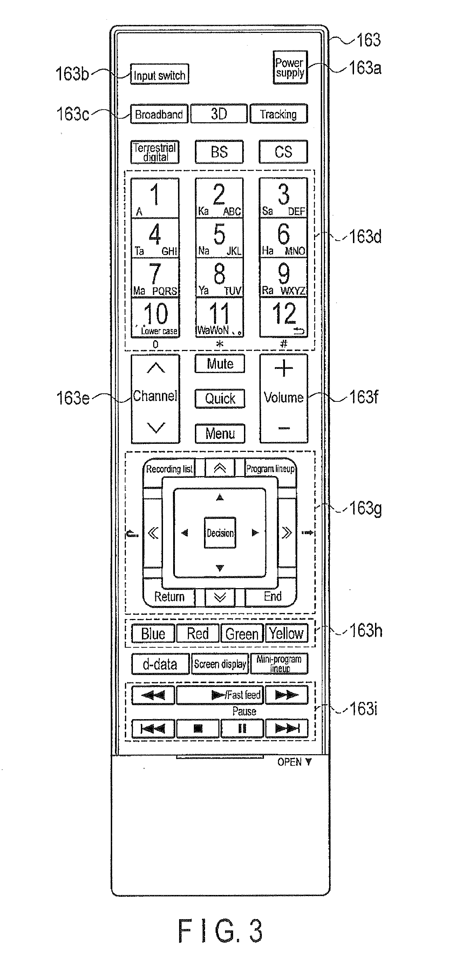

FIG. 3 shows a structural example of the remote controller 163.

The remote controller 163 has a power supply key 163a, an input switch key 163b, a function key 163c, numeric keys 163d, a channel key 163e, a volume key 163f, cursor keys 163g, color keys 163h, and control keys 163i. The remote controller 163 generates an operation signal in accordance with an operation of each key and outputs the generated operation signal. For example, the remote controller 163 outputs the operation signal using infrared rays.

The power supply key 163a is a key that allows the broadcast reception apparatus 100 to switch a power supply state.

The input switch key 163b is a key that allows the broadcast reception apparatus to switch the input terminals for a broadcast signal and contents. The broadcast reception apparatus 100 switches content data that is to be supplied to the signal processor 113 in accordance with an operation of the input switch key 163b.

The function key 163c is a key that allows the broadcast reception apparatus 100 to execute various kinds of functions. The function key 163c has, e.g., a broadband key, a 3D key, a tracking key, and others. The broadband key is a key that allows the broadcast reception apparatus 100 to bring up a browser for browsing the Internet.

The 3D key is a key that allows the broadcast reception apparatus 100 to switch 2D display and 3D display. The tracking key is a key that allows the broadcast reception apparatus 100 to display a screen which is used by a user to confirm a position where viewing the 3D display is possible.

The numeric keys 163d are keys that allow the broadcast reception apparatus 100 to select a channel. Further, the numeric keys 163d can also function as keys for inputting a character string and others.

For example, when the browser is active and a character input box in the screen of the browser is selected, the broadcast reception apparatus 100 generates a character string based on an operation signal associated with the numeric keys 163d and inputs the generated character string in the character input box. Furthermore, the remote controller 163 also includes selection keys for selecting digital terrestrial, BS, and CS broadcast signals.

The channel key 163e is a key that allows the broadcast reception apparatus 100 to select a channel.

The volume key 163f is a key that allows the broadcast reception apparatus 100 to adjust sound volume.

The cursor keys 163g are keys that allow the broadcast reception apparatus 100 to execute various kinds of processing. The cursor keys 163g include a cross key, a decision key, a program lineup key, a recording list key, a return key, an end key, and others. The broadcast reception apparatus 100 performs, e.g., selection of various items on the screen based on operation signals associated with the cross key and the decision key.

Moreover, the broadcast reception apparatus 100 performs, e.g., switching of a recording list screen, a program lineup screen, and any other display screen based on an operation signal associated with the return key. Additionally, the broadcast reception apparatus 100 terminates display of the recording list screen, the program lineup screen, and any other display screen based on an operation signal associated with the end key.

Further, the broadcast reception apparatus 100 generates the program lineup screen based on a broadcast signal associated with the broadcast lineup key and displays the program lineup screen in the display 134. Furthermore, the broadcast reception apparatus 100 generates a screen (a recording list screen) showing a list of recorded contents (a recording list) that can be reproduced by the broadcast reception apparatus 100 based on an operation signal associated with the recording list key and displays the recording list screen in the display 134.

The color keys 163h are keys that allow the broadcast reception apparatus 100 to perform various operations. The control keys 163i include a reproduction key, a stop key, a fast-forward key, a rewind key, a pause key, a next key, a previous key, and others.

The broadcast reception apparatus 100 starts reproduction/stop/fast-forward/rewind/pause and others with respect to contents based on an operation signal associated with each key.

Further, the remote controller 163 comprises a mute key, a quick key, a menu key, a d-data key, a screen display key, a mini program lineup key, and others.

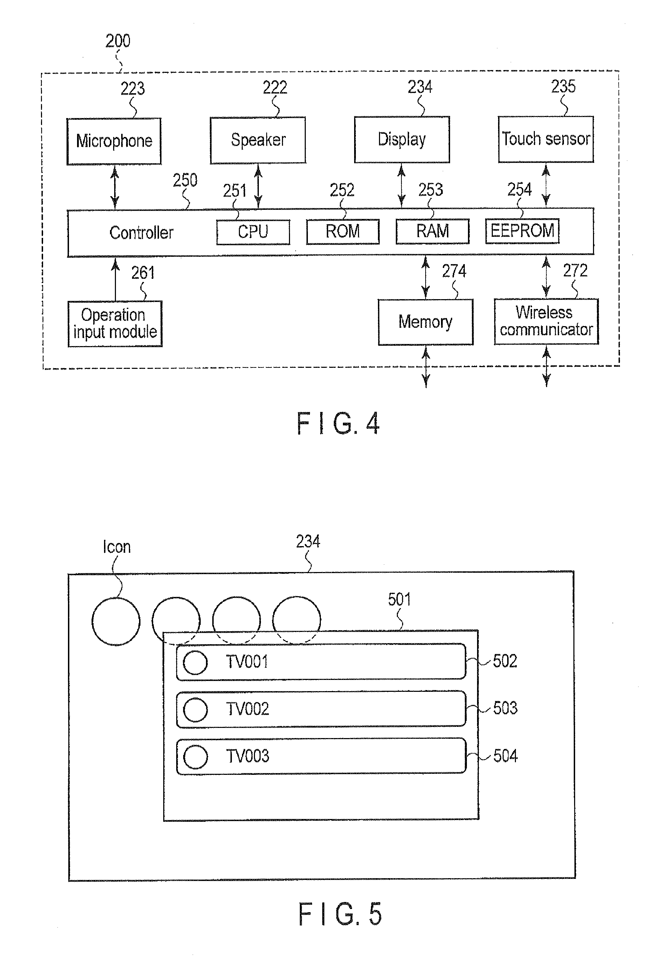

FIG. 4 shows an example of the mobile terminal 200 according to an embodiment.

The mobile terminal 200 comprises a controller 250, an operation input module 261, a wireless communicator 272, and a memory 274. Furthermore, the mobile terminal 200 comprises a speaker 222, a microphone 223, a display 234, and a touch sensor 235.

The controller 250 functions as a controller configured to control operations of the respective units in the mobile terminal 200. The controller 250 comprises a CPU 251, an ROM 252, an RAM 253, an EEPROM 254, and others. The controller 250 executes various kinds of processing based on an operation signal supplied from the operation input module 261 or the touch sensor 235.

The CPU 251 comprises an arithmetic operation element or the like that executes various kinds of arithmetic processing. The CPU 251 executes programs stored in the ROM 252, the EEPROM 254, or the like and realizes various functions.

The ROM 252 stores a program for controlling the mobile terminal 200, a program for realizing various kinds of functions, and others. The CPU 251 activates a program stored in the ROM 252 based on an operation signal supplied from the operation input module 261. As a result, the controller 250 controls operations of the respective units.

The RAM 253 functions as a work memory of the CPU 251. That is, the RAM 253 stores results of arithmetic operations performed by the CPU 251, data read by the CPU 251, and others.

The EEPROM 254 is a nonvolatile memory that stores various kinds of setting information, programs, and others.

Additionally, the CPU 251 can execute various kinds of processing based on data such as an application stored in the memory 274.

Further, the controller 250 can generate video signals for various screens in accordance with an application executed by the CPU 251 and display these signals in the display 234. Furthermore, the controller 250 can generate sound signals of various kinds of sounds in accordance with an application executed by the CPU 251 and output these signals through the speaker 222.

The speaker 222 reproduces sound based on a supplied audio signal.

The microphone 223 is a sound collector configured to generate a signal (a recording signal) based on sound outside the mobile terminal 200. The microphone 223 supplies the recording signal to the controller 250.

The display 234 comprises, e.g., a liquid crystal display apparatus provided with a liquid crystal display panel including pixels aligned in a matrix form and a backlight that illuminates this liquid crystal panel.

The touch sensor 235 is a capacitance sensor, a thermosensor, or an apparatus that generates positional information based on any other system. For example, the touch sensor 235 is provided integrally with the display 234. As a result, the touch sensor 235 can generate an operation signal based on an operation on the screen displayed in the display 234 and supply the generated signal to the controller 250.

The operation input module 261 comprises keys configured to generate an operation signal in response to input of an operation performed by a user. The operation input module 261 comprises, e.g., a volume adjustment key for adjusting volume, a luminance adjustment key for adjusting display luminance of the display 2347, a power supply key for switching a power supply state of the mobile terminal 200, and others. Furthermore, the operation input module 261 may further include a track ball that enables the mobile terminal 200 to execute various selecting operations and others. The operation input module 261 generates an operation signal in accordance with an operation of each of the above-described keys and supplies the operation signal to the controller 250.

Moreover, the operation input module 261 may be configured to receive an operation signal from a keyboard, a mouse, or any other input apparatus that can generate the operation signal. When the mobile terminal 200 includes a USB terminal, a Bluetooth (registered trademark) module, or the like, the operation input module 261 receives an operation signal from an input apparatus connected through the USB or Bluetooth and supplies the received signal to the controller 250.

The wireless communicator 272 is an interface configured to perform communication with the wireless communication terminal 300 as an access point through the wireless LAN. The wireless communicator 272 can communicate with any other apparatus on a network, e.g., the Internet through the wireless communication terminal 300. For example, the wireless communicator 272 has a function of performing communication with the wireless communication terminal 300 based on, e.g., IEEE802.11b/g/n.

As described above, when the wireless communication terminal 300 and the wireless communicator 272 are connected to each other through the wireless LAN, the mobile terminal 200 can communicate with other apparatuses connected to the wireless communication terminal 300. Additionally, the wireless communicator 272 may be configured to directly communicate with other apparatuses based on the wireless LAN without interposing the wireless communication terminal 300.

Further, the mobile terminal 200 includes a non-illustrated power supply unit. The power supply unit comprises a terminal (e.g., a DC jack) configured to achieve connection with an adapter that receives electric power from a commercial power source or the like. The power supply unit changes a battery with the electric power received from the commercial power source. Furthermore, the power supply unit supplies the electric power charging the battery to the respective units in the mobile terminal 200.

The memory 274 comprises a hard disk drive (HDD), a solid state drive (SSD), a semiconductor memory, or the like. The memory 274 can store programs or applications executed by the CPU 251 of the controller 250 and various kinds of data.

The memory 274 stores, e.g., an operating system (OS) and various kinds of applications that can be executed on the OS. The memory 274 has, e.g., a remote control application. The remote control application is a program that allows the mobile terminal 200 to function as a controller of other apparatuses.

FIG. 5 to FIG. 10 show examples of the remote control application.

FIG. 5 shows an example of a home screen of the OS displayed in the display 234 of the mobile terminal 200. The home screen displays icons and the like used for activating various kinds of applications. The controller 250 of the mobile terminal 200 activates the remote control application when the remote control application is selected from the home screen or a list of applications.

When the remote control application is activated, the controller 250 displays in the display 234 a window 501 for selecting an apparatus to be controlled using the remote control application. The controller 250 displays in the window 501 a list of apparatuses (controlled apparatuses) previously registered as apparatuses to be controlled using the remote control application.

For example, when "TV001", "TV002", and "TV003" are registered, the controller 250 displays a button 502 for selecting "TV001", a button 503 for selecting "TV002", and a button 504 for selecting "TV003" in the window 501.

When any one of these buttons is selected, the controller 250 displays a screen (a remote control menu or an operation menu) for controlling the selected apparatus in the display 234.

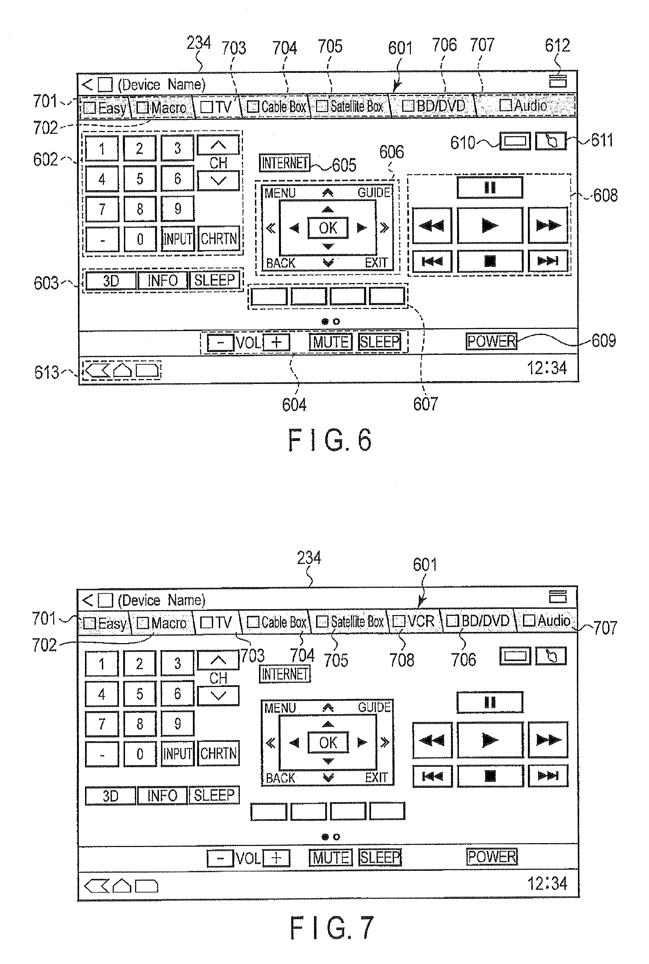

FIG. 6 shows an example of the remote control menu. Here, an example of the remote control menu (a TV remote control menu) for controlling the broadcast reception apparatus 100. The controller 250 displays the remote control menu in the display 234. The controller 250 transmits a signal to the broadcast reception apparatus 100 which is a controlled apparatus in response to an operation in the remote control menu.

It is to be noted that the remote control application has different remote control menus in accordance with types of the controlled apparatuses. That is, the remote control application has remote control menus in which buttons are customized in accordance with the types of the controlled apparatuses.

The controller 250 displays in the TV remote control menu apparatus selection tabs 601, channel selection buttons 602, function buttons 603, volume buttons 604, an Internet button 605, cursor buttons 606, color buttons 607, control buttons 608, a power supply button 609, a keyboard button 610, a pointer button 611, a setting button 612, and a menu button 613.

The mobile terminal 200 generates an operation signal in accordance with an operation of each button and outputs the generated operation signal. For example, the mobile terminal 200 transmits an operation signal to the broadcast reception apparatus 100 through the wireless communicator 272 based on the wireless LAN and the like.

The apparatus selection tabs 601 are tabs that enable selecting an apparatus to be controlled using the remote control application.

The channel selection buttons 602 are keys for allowing the broadcast reception apparatus 100 to select a channel. The channel selection buttons 602 have numeric buttons and upper and lower buttons. The broadcast reception apparatus 100 selects a channel (channel selection) for a broadcast signal based on an operation signal associated with the channel selection buttons.

The function buttons 603 are keys that allow the broadcast reception apparatus to execute various functions. The function buttons 603 have, e.g., a 3D button, an info button, a sleep button, and others.

The 3D button is a key that allows the broadcast reception apparatus 100 to switch 2D display and 3D display. The info button is a button that allows the broadcast reception apparatus 100 to display various kinds of information. For example, the broadcast reception apparatus 100 displays in the display 134 information concerning contents, screens based on various kinds of data included in broadcast signals, and others based on an operation signal associated with the info button. The sleep button is a button that configures settings concerning control over the power supply of the broadcast reception apparatus 100.

The volume buttons 604 are buttons that allow the broadcast reception apparatus 100 to adjust volume. The volume buttons 604 have a plus button and a minus button. The broadcast reception apparatus 100 adjusts volume of the speaker 122 based on an operation signal associated with a plus button and a minus button.

Furthermore, the volume buttons 604 also have a mute button. The broadcast reception apparatus 100 switches to a mute state that sound is not output from the speaker 122 based on an operation signal associated with the mute button.

The Internet button 605 is a button that allows the broadcast reception apparatus 100 to activate a browser for viewing the Internet. The broadcast reception apparatus 100 activates the browser based on an operation signal associated with the Internet button 605.

The cursor buttons 606 are buttons that allow the broadcast reception apparatus 100 to execute various kinds of processing. The cursor buttons 606 include a cross button, a decision button (an OK button), a program lineup button (a guide button), a menu button, a back button, an end button (an exit button), and others. The broadcast reception apparatus 100 performs, e.g., selection of various items in the screen based on operation signals associated with the cross button and the decision button.

Moreover, the broadcast reception apparatus 100 performs, e.g., switching of a recording list screen, a program lineup screen, and any other display screen based on an operation signal associated with the back button. Additionally, the broadcast reception apparatus 100 terminates display of the recording list screen, the program lineup screen, and any other display screen based on an operation signal associated with the end button.

Further, the broadcast reception apparatus 100 generates a program lineup screen based on a broadcast signal in accordance with an operation signal associated with the program lineup button and displays the program lineup screen in the display 134. Furthermore, the broadcast reception apparatus 100 displays a menu for changing various kinds of settings of the broadcast reception apparatus 100 in the display 134 based on an operation signal associated with the menu button.

The color buttons 607 are buttons that allow the broadcast reception apparatus 100 to perform various kinds of operations.

The control buttons 608 includes a reproduction button, a stop button, a fast-forward button, a rewind button, a pause button, a next button, a previous button, and others.

The broadcast reception apparatus 100 starts, e.g., reproduction/stop/fast-forward/rewind of contents based on an operation signal associated with each button.

The power supply button 609 is a button for switching a power supply state of the broadcast reception apparatus 100.

The keyboard button 610 is a button for activating an application (a keyboard application) which is used to input characters in the mobile terminal 200. The pointer button 611 is a button for activating an application (a pointer application) that is used for operating a pointer in the mobile terminal 200.

The setting button 612 is a button for displaying a setting menu that is used to change various kinds of settings of the remote control application. The mobile terminal 200 displays the setting menu in the display 234 in accordance with an operation with respect to the setting button 612.

The menu buttons 613 are buttons that enable the mobile terminal 200 to execute various operations on the OS. The mobile terminal 200 switches a screen of the running application to a previous screen in accordance with an operation of the return button. Further, the mobile terminal 200 displays a home screen of the OS in the display 234 in accordance with an operation of the home button.

A tab (a selection tab) displayed in the apparatus selection tabs 601 changes in accordance with the connection apparatus 400 connected to the broadcast reception apparatus 100 controlled using the remote control application. Therefore, the controller 250 recognizes the connection apparatus 400 connected to the broadcast reception apparatus 100.

As described above, the mobile terminal 200 periodically performs polling with respect to the broadcast reception apparatus 100 based on wireless communication and thereby sequentially recognizes a state of the broadcast reception apparatus 100. For example, the broadcast reception apparatus 100 returns to the mobile terminal 200 information concerning the connection apparatus 400 connected thereto (a connection state) with respect to the polling from the mobile terminal 200. The broadcast reception apparatus 100 returns to the mobile terminal 200 information indicative of, e.g., a type, identification information, a connection terminal, and a device name of the connection apparatus 400 as the information concerning the connection apparatus 400. As a result, the mobile terminal 200 can recognize the type, the identification information, the connection terminal, and the device name of the connection apparatus 400 connected to the broadcast reception apparatus 100 as the controlled apparatus.

It is to be noted that the mobile terminal 200 carries out polling with respect to the broadcast reception apparatus 100 based on the wireless communication at the time of activating the remote control application. Furthermore, after activating the remote control application, the mobile terminal 200 periodically performs polling with respect to the broadcast reception apparatus 100.

According to the example shown in FIG. 1, to the broadcast reception apparatus 100 are connected the cable box 400A, the satellite box 400B, and the BD/DVD player 400C, and the audio player 400D. In this case, the broadcast reception apparatus 100 returns information concerning the cable box 400A, the satellite box 400B, the BD/DVD player 400C, and the audio player 400D to the mobile terminal 200 with respect to the polling from the mobile terminal 200. As a result, the mobile terminal 200 can recognized that the cable box 400A, the satellite box 400B, the BD/DVD player 400C, and the audio player 400D are connected to the broadcast reception apparatus 100 as the controlled apparatus.

The controller 250 displays a selection tab 701 for dividing the remote control menu and display the divided screen and a selection tab for executing macro processing in the display 234 as the apparatus selection tabs 601.

Moreover, the controller 250 displays in the display 234 a selection tab 703 for selecting the broadcast reception apparatus 100, a selection tab 704 for selecting the cable box 400A, a selection tab 705 for selecting the satellite box 400B, a selection tab 706 for selecting the BD/DVD player 400C, a selection tab 707 for selecting the audio player 400D as the apparatus selection tabs 601.

For example, it is assumed that a video cassette recorder (VCR) is further connected to the broadcast reception apparatus 100. In this case, the broadcast reception apparatus 100 returns to the mobile terminal 200 information concerning the cable box 400A, the satellite box 400B, the BD/DVD player 400C, the audio player 400D, and the VCR with respect to the polling from the mobile terminal 200. As a result, the mobile terminal 200 can recognize that the VCR is further connected to the broadcast reception apparatus 100 as the controlled apparatus.

In this case, as shown in FIG. 7, the controller 250 switches display of the apparatus selection tabs 601. That is, the controller 250 adds a selection tab 708 for selecting the newly connected VCR to the apparatus selection tabs 601. Additionally, when the controller 250 recognizes that a connection apparatus is removed from the broadcast reception apparatus 100, the selection tab associated with the removed apparatus is deleted from the apparatus selection tabs 601.

Further, the controller 250 switches the remote control menu displayed in the display 234 in accordance with an operation for the apparatus selection tabs 601.

As described above, the remote control application has different remote control menus in accordance with the types of controlled apparatus. For example, the remote control application has a TV remote control menu for controlling the broadcast reception apparatus (TV) 100, a cable TV remote control menu for controlling the cable box 400A, a satellite TV remote control menu for controlling the satellite box 400B, a player remote control menu for controlling the BD/DVD player 400C, an audio remote control menu for controlling the audio player 400D, and a video cassette remote control menu for controlling the VCR. Buttons suitable for control over each apparatus are arranged in each remote control menu.

The controller 250 switches the TV remote control menu, the cable TV remote control menu, the satellite TV remote control menu, the player remote control menu, the audio remote control menu, and the video cassette remote control menu in accordance with selection of the selection tabs 703 to 708 of the apparatus selection tabs 601.

Furthermore, the controller 250 generates a control signal for instructing to switch input in the broadcast reception apparatus 100 in accordance with selection of the selection tabs 703 to 708 of the apparatus selection tabs 601. That is, the controller 250 generates the control signal for controlling the broadcast reception apparatus 100 so that contents data output from the connection apparatus 400 selected by any apparatus selection tab 601 can be input to the signal processor 113 of the broadcast reception apparatus 100. As a result, the controller 250 can switch input of the broadcast reception apparatus 100 in accordance with selection of any apparatus selection tab 601.

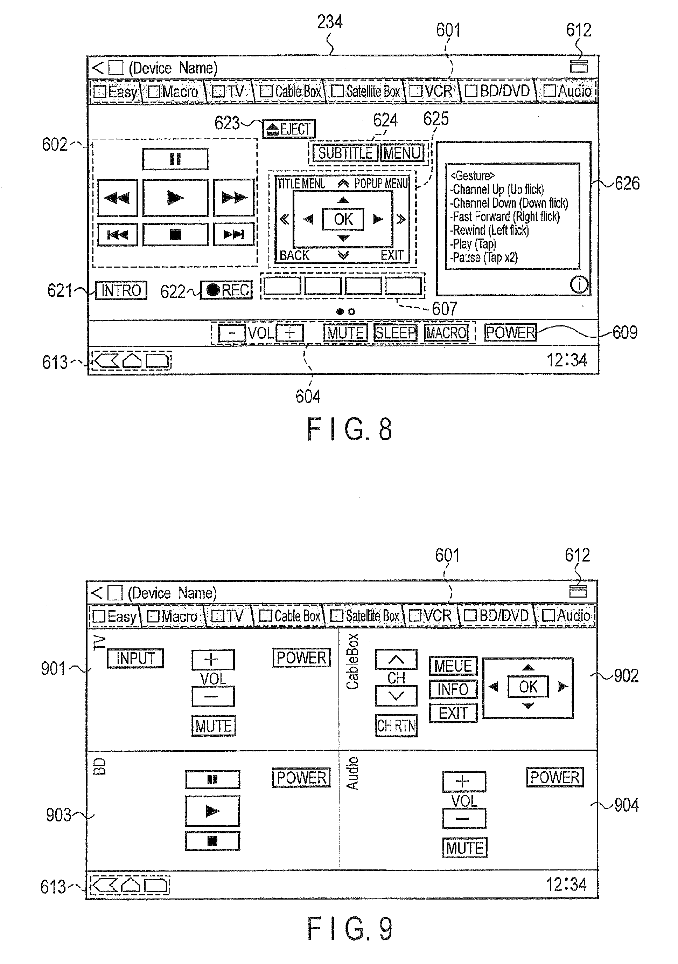

FIG. 8 shows an example of the player remote control menu. Here, an example of the remote control menu for controlling the BD/DVD player is shown. It is to be noted that a description on buttons overlapping those in the TV remote control menu will be omitted. The controller 250 transmits a control signal to the broadcast reception apparatus 100 as the controlled apparatus in accordance with an operation in the remote control menu. The broadcast reception apparatus 100 transmits the received control signal to the BD/DVD player 400C.

The controller 250 displays in the player remote control menu the apparatus selection tabs 601, the volume buttons 604, the color buttons 607, the control buttons 608, the power supply button 609, the setting button 612, the menu button 613, an intro button 621, a recording button 622, an eject button 623, function buttons 624, cursor buttons 625, and a gesture input frame 626.

The intro button 621 is a button that allows the BD/DVD player 400C to execute intro reproduction. The recording button 622 is a button that allows the BD/DVD player 400C to execute recording. The eject button 623 is a button that executes ejection of an optical disk in the BD/DVD player 400C.

The function buttons 624 are buttons that allow the BD/DVD player 400C to execute various functions. For example, the function buttons 603 have a sub-title button and a menu button.

The subtitle button is a button that allows the BD/DVD player 400C to switch ON/OFF of subtitle display. The menu button is a button that allows the BD/DVD player 400 to execute display of the menu screen.

The cursor buttons 625 are buttons that allow the BD/DVD player 400C to execute various kinds of processing. The cursor buttons 625 include a cross button, a decision button (OK button), a title menu button, a popup menu button, a back button, an end button (an exit button), and others. The BD/DVD player 400C performs, e.g., selection of various items in the screen based on operation signals associated with the cross button and the decision button.

The title menu button is a button that allows the BD/DVD player 400C to display a title menu. It is a button that allows the BD/DVD player 400C to display a popup menu.

Further, the BD/DVD player 400C performs, e.g., switching of respective display screens based on an operation signal associated with a back button. Furthermore, the BD/DVD player 400C terminates display of each screen based on an operation signal associated with the end button.

The gesture input frame 626 is an input frame that allows a user to input a gesture. The controller 250 generates various operation signals based on a gesture input to the gesture input frame 626.

For example, when an upward flick operation is input to the gesture input frame 626, the controller 250 generates a control signal that instructs to increase the volume. Moreover, when a downward flick operation is input to the gesture input frame 626, the controller 250 generates a control signal that instructs to decrease the volume. Additionally, when a right flick operation is input to the gesture input frame 626, the controller 250 generates a control signal that instructs to fast-forward. Further, when a left flick operation is input to the gesture input frame 626, the controller 250 generates a control signal that instructs to rewind. Furthermore, when a tap operation is input to the gesture input frame 626, the controller 250 generates a control signal that instructs to perform reproduction. Moreover, when two tap (double tap) operations are input to the gesture input frame 626, the controller 250 generates a control signal that instructs to pause.

Additionally, when the selection tab 701 in the apparatus selection tabs 601 is selected, the controller 250 displays a divided remote control screen in the display 254.

FIG. 9 shows an example of the divided remote control screen. Here, there is shown an example of the divided remote control screen configured to control the broadcast reception apparatus 100, the cable box 400A, the BD/DVD player 400C, and the audio player 400D. It is to be noted that a description of buttons overlapping those in the TV remote control menu and the player remote control menu will be omitted. The controller 250 transmits a control signal to the broadcast reception apparatus 100 which is the controlled apparatus in accordance with an operation in the remote control menu.

The controller 250 displays the apparatus selection tabs 601, the setting button 612, and the menu button 613 in the divided remote control screen. Further, the controller 250 displays a menu 901 for the broadcast reception apparatus 100, a menu 902 for the cable box 400A, a menu 903 for the BD/DVD player 400C, and a menu 904 for the audio player 400D as the divided remote control screen in the display 234. It is to be noted that buttons in each menu are equal to the buttons in each remote screen mentioned above, and hence a detailed description thereof will be omitted.

The menu 901 for the broadcast reception apparatus 100 has an input switch button, a volume adjustment button, a mute button, and a power supply button. The controller 250 generates a control signal which is used for controlling the broadcast reception apparatus 100 in accordance with an operation in the menu 901.

The menu 902 for the cable box 400A has a channel button, a menu button, an info button, an exit button, and a cursor key. The controller 250 generates a control signal which is used for controlling the cable box 400A in accordance with an operation in the menu 902.

The menu 903 for the BD/DVD player 400C has a pause button, a reproduction button, a stop button, and a power supply button. The controller 250 generates a control signal which is used for controlling the BD/DVD player 400C in accordance with an operation in the menu 903.

The menu 904 for the audio player 400D has a volume adjustment button, a mute button, and a power supply button. The controller 250 generates a control signal which is used for controlling the audio player 400D in accordance with an operation in the menu 904.

That is, the controller 250 displays in the display 234 a divided screen (a divided operation screen) including display frames (display regions) that display menus (a remote control menu or an operation menu) for controlling the respective connection apparatuses 400. The controller 250 controls each unit to transmit a signal for controlling each connection apparatus 400 to the broadcast reception apparatus 100 in accordance with an operation in each menu in the divided operation screen.

The controller 250 wirelessly transmits the generated control signal to the broadcast reception apparatus 100. The broadcast reception apparatus 100 transmits the received control signal to the corresponding connection apparatus 400. As a result, the mobile terminal 200 can control operations of the controlled apparatus and the connection apparatuses.

Moreover, as described above, the controller 250 switches a menu (the remote control menu or the operation menu) that is to be displayed in the display region of the divided remote control screen (the divided operation screen) in accordance with a connection state of the connection apparatus 400 connected to the broadcast reception apparatus 100. Additionally, the controller 250 may be configured to switch the number of the display regions in the divided remote control screen in accordance with a connection state of the connection apparatus 400 connected to the broadcast reception apparatus 100. For example, when the number of the connection apparatuses is two, the number of the display regions included in the divided operation screen may be two. Further, each display region in this case may have an area larger than that of each display region in the case where the number of the connection apparatuses is four. Furthermore, the upper limit of the number of the display regions displayed in the divided remote control screen may be previously determined.

Furthermore, the controller 250 may generate a control signal which instructs to switch input in the broadcast reception apparatus 100 in accordance with an operation with respect to the display region in the divided remote control screen. That is, the controller 250 transmits a signal to switch input in the broadcast reception apparatus 100 in accordance with an operation with respect to the display region in the divided remote control screen. As a result, the controller 250 generates a control signal that is used for controlling the broadcast reception apparatus 100 so that content data output from the connection apparatus 400 associated with the display region selected in the divided remote control screen can be input to the signal processor 113 of the broadcast reception apparatus 100.

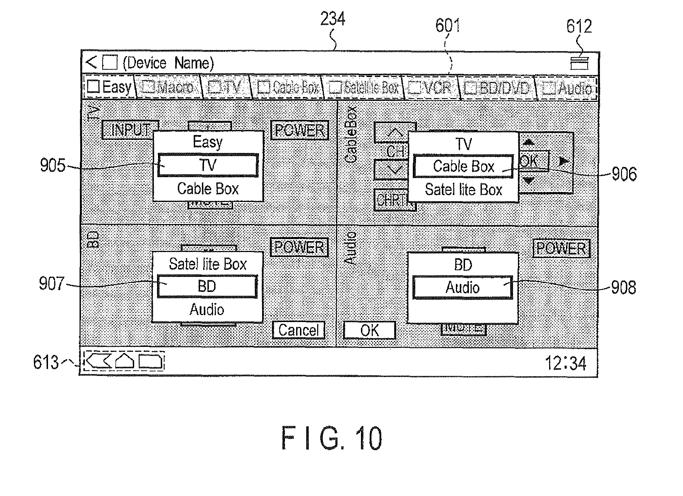

It is to be noted that respective display items (the display regions) in the divided remote control screen can be individually set. For example, when the setting button 612 in the divided remote control screen is selected, the controller 250 displays the setting screen depicted in FIG. 10 in the display 234.

The setting screen has buttons (apparatus selection buttons) 905 to 908 used for selecting a menu which is displayed for each display frame where the menu is displayed. The apparatus selection buttons 905 to 908 are displayed in accordance with each of the display items in the divided remote control screen. The controller 250 determines a menu which is to be displayed for each display item using the apparatus selection buttons 905 to 908. That is, the controller 250 displays in each display item a menu associated with an apparatus (a type) selected by each of the apparatus selection buttons 905 to 908.

Further, the controller 250 switches the apparatus selection button which is to be displayed in the setting screen in accordance with the connection apparatus 400 connected to the broadcast reception apparatus 100. That is, the controller 250 switches the apparatus selection button like the apparatus selection tabs 601 in the remote control menu.

As described above, the mobile terminal 200 periodically recognizes a state of the broadcast reception apparatus 100 which is the controlled apparatus. As a result, the mobile terminal 200 can recognize the connection apparatus 400 connected to the broadcast reception apparatus 100. The mobile terminal 200 updates display of the apparatus selection tabs 601 in the remote control menu in accordance with the recognized connection apparatus 400. Furthermore, the mobile terminal 200 can control the broadcast reception apparatus 100 to switch input in accordance with an operation for the apparatus selection tabs 601.

Moreover, the mobile terminal 200 previously stores the remote control menus associated with the types of the connection apparatuses 400. As a result, the mobile terminal 200 can display in the display 234 the remote control menu associated with an apparatus selected by any apparatus selection tab 601.

Additionally, the mobile terminal 200 can divide the remote control menu into the simplified menus in accordance with the types and display the divided menus. As a result, the mobile terminal 200 can display the remote control menu for controlling the connection apparatuses 400 in the display 234.

Consequently, a user can input an operation for controlling each connection apparatus 400 in one remote control menu without switching the apparatus as a control target using each apparatus selection tab 601. As a result, it is possible to provide the electronic apparatus and the controlling method for an electronic apparatus having enhanced convenience.

It is to be noted that the controller 250 can arbitrarily set buttons displayed in each menu in the divided remote control screen based on input of an operation. As a result, the controller 250 can display the remote control menu with the button arrangement meeting a user's demand in the display 234.

Additionally, the controller 250 can change a size of the display frame in which each menu in the divided remote control screen is displayed to an arbitrary size based on input of an operation. As a result, for example, a size of the TV menu can be increased, and that of the audio menu can be reduced. Consequently, the controller 250 can change, e.g., the number of the buttons that can be displayed in each menu. As a result, the convenience can be further enhanced.

The controller 250 can control each connection apparatus 400 in such a manner that the connection apparatuses 400 connected to the broadcast reception apparatus 100 can execute processing in a predetermined sequence in accordance with previously embedded macros. For example, when the selection tab 207 in the apparatus selection tabs 601 is selected, the controller 250 can execute macro processing by the above-described connection apparatuses 400 in a predetermined sequence.

Additionally, when there are methods for transmitting a control signal from the broadcast reception apparatus 100 to the connection apparatus 400, the mobile terminal 200 can control the broadcast reception apparatus 100 to select on method in a preferential manner.

As described above, the broadcast reception apparatus 100 can transmit the control signal to the connection apparatus 400 using the IR bluster 164. Further, the broadcast reception apparatus 100 can transmit the control signal to the connection apparatus 400 through the HDMI terminal 173. When the polling is received from the mobile terminal 200, the broadcast reception apparatus 100 notifies the mobile terminal 200 that the control signal can be transmitted to the connection apparatus 400 from both the IR bluster 164 and the HDMI terminal 173.

The controller 250 of the mobile terminal 200 recognizes the connection apparatus 400 connected to the broadcast reception apparatus 100 in accordance with the connection terminal based on a response to the polling. For example, it is assumed that the connection apparatus 400 can receive the control signal from the broadcast reception apparatus 100 through the IR bluster 164 and the HDMI terminal 173. In this case, the controller 250 recognizes that the connection apparatus 400 is connected to the broadcast reception apparatus 100 through the IR bluster 164 and the HDMI terminal 173 based on information indicative of the connection terminal included in the response to the polling.

In this case, the controller 250 controls to display in the display 234 one of the remote control menu used for transmitting the control signal to the connection apparatus 400 through the IR bluster 164 and the remote control menu used for transmitting the control signal to the connection apparatus 400 through the HDMI terminal 173. As a result, the mobile terminal 200 can prevent the selection tab used for selecting the same connection apparatus 400 from being displayed in the apparatus selection tabs 601. Further, the mobile terminal 200 can prevent the menu used for controlling the same connection apparatus 400 from being displayed in the divided remote control screen. Furthermore, the mobile terminal 200 can prevent the selection button used for selecting the same connection apparatus 400 from being displayed in the setting menu in the divided remote control screen.

The mobile terminal 200 determines a method which is selected on a preferential basis in accordance with a predetermined setting when there are methods for transmitting the control signal to the connection apparatus 400 from the broadcast reception apparatus 100. The mobile terminal 200 can sequentially change this setting in accordance with an operation of a user.

It is to be noted that the controller 250 may be configured to recognize the connection apparatus 400 based on, e.g., a device name or identification information included in the response to the polling.

It is to be noted that the example of the broadcast reception apparatus as the controlled apparatus has been described in the foregoing embodiment, but the electronic apparatus and controlling method for electronic apparatus are not restricted thereto.

Functions described in the above embodiment may be constituted not only with use of hardware but also with use of software, for example, by making a computer read a program which describes the functions. Alternatively, the functions each may be constituted by appropriately selecting either software or hardware.

## Claims

1. An electronic apparatus configured to control an external apparatus, the electronic apparatus **characterized by** comprising:
a communicator (272) configured to communicate with the external apparatus;
a recognition module (250) configured to recognize a connection apparatus connected to the external apparatus;
an operation menu generator (250) configured to generate an operation menu which is used to control the external apparatus or the connection apparatus; and
a controller (250) configured to control in such a manner that a divided operation screen including display regions which are used to display the operation menus is displayed in a display and a signal is transmitted to the external apparatus in accordance with an operation in the divided operation screen.

2. The apparatus of claim 1,
**characterized in that** the recognition module recognizes a connection state of the connection apparatus, and
the controller switches the operation menu that is to be displayed in the display region included in the divided operation screen in accordance with the connection state recognized by the recognition module.

3. The apparatus of claim 1 or 2,
**characterized in that** the controller controls to switch input of the external apparatus in accordance with an operation for the display region included in the divided operation screen.

4. The apparatus of one of claims 1 to 3, **characterized by** further comprising:
a memory (274) configured to store the operation menus associated with types of the connection apparatuses,
the recognition module recognizes the type of the connection apparatuses, and
the controller displays the operation menu associated with the type of the connection apparatus in each display region in the divided operation screen.

5. The apparatus of one of claims 1 to 4,
**characterized in that** the controller displays selection buttons indicative of the types of the connection apparatuses in accordance with each of the display regions and switches the operation menu which is displayed in each of the display regions in accordance with an operation of the selection button.

6. The apparatus of claim 5,
**characterized in that** the controller switches the selection button which is displayed in each display region in accordance with a recognition result obtained by the recognition module.

7. The apparatus of one of claims 1 to 6, **characterized in that**, when the external apparatus and the connection apparatus are connected to each other through connection modules, the controller displays the operation menu that is used for controlling the connection apparatus through the set one connection module in the divided operation screen.

8. The apparatus of one of claims 1 to 7,
**characterized in that** the recognition module performs polling with respect to the external apparatus and recognizes the connection apparatus connected to the external apparatus based on information received from the external apparatus.

9. An electronic apparatus configured to operate under control of an external apparatus, the electronic apparatus **characterized by** comprising:
communicator (171, 172) configured to communicate with the external apparatus;
a connection module (171, 172, 173) configured to connect a connection apparatus while enabling transmission of a signal;
a recognition module (100) configured to recognize a state of connection with the connection apparatus;
an operation signal receiver (171, 172) configured to receive an operation signal; and
a controller (150) configured to transmit the received operation signal to the connection apparatus when the operation signal for controlling the connection apparatus is received and configured to control an operation of the electronic apparatus in accordance with the operation signal and transmit a recognition result obtained by the recognition module to the external apparatus when the operation signal for controlling the electronic apparatus is received.

10. A controlling method for an electronic apparatus which comprises a communicator (272) configured to communicate with an external apparatus and controls the external apparatus, the method **characterized by** comprising:
recognizing a connection apparatus connected to the external apparatus;
generating an operation menu configured to control the external apparatus or the connection apparatus; and
displaying a divided operation screen comprising display regions each configured to display the operation menu, and transmitting a signal to the external apparatus in accordance with an operation in the divided operation screen.
